Europäisches Patentamt

European Patent Office

Office européen des brevets

(19)

(11) Publication number: **0 150 159**
**B1**

(12) EUROPEAN PATENT SPECIFICATION

(45) Date of publication of patent specification: **01.06.88**

(51) Int. Cl.⁴: **B 29 C 53/30** // A47G21/18

(21) Application number: **85830005.6**

(22) Date of filing: **11.01.85**

(54) Procedure and relevant mechanical execution to obtain the folding section of a plastic drinking straw.

(30) Priority: **13.01.84 IT 60284**

(43) Date of publication of application:
**31.07.85 Bulletin 85/31**

(45) Publication of the grant of the patent:
**01.06.88 Bulletin 88/22**

(84) Designated Contracting States:
**AT BE CH DE FR GB LI LU NL SE**

(56) References cited:
**DE-A-2 804 012**
**FR-A-2 073 777**
**GB-A- 922 663**
**US-A-2 094 268**
**US-A-2 957 205**
**US-A-2 985 077**
**US-A-3 409 224**
**US-A-3 493 998**
**US-A-3 641 884**

(73) Proprietor: **Donati, Gino**
**Via Carpignola, 64**
**I-47033 Cattolica (FO) (IT)**

(72) Inventor: **Donati, Gino**
**Via Carpignola, 64**
**I-47033 Cattolica (FO) (IT)**

(74) Representative: **Baldi, Claudio**
**Piazza Ghislieri, 3**
**I-60035 Jesi (Ancona) (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The subject of the present patent application for an industrial invention, the procedure, together with the relevant mechanical execution, for obtaining the folding section of a plastic drinking straw, by means of a series of small circular grooves parallel to each other all around the straw.

A similar type of straw, the commercial and functional importance of which is well known, is currently produced manually or by means of a highly complex industrial procedure, the execution of which is anything but economical and functional.

To obtain a straw with a folding section, thanks to which, as is well known, it can be folded in any direction of about 90° without damaging the passage section in the slightest, up to the present a procedure with the following phases has been used:

a) positioning of a straw on a piston pin having a section fluted by a close series of circular parallel grooves, which is inserted precisely inside the straw;

b) operation and closing of two semi-circular jaws capable of gripping the straw and having ribs parallel to each other on their internal surfaces, the profile and dimensios of which perfectly match those on the piston pin.

To obtain a high productivity level, it is consequently necessary to operate on a large number of straws, each contained in a groove, positioned on the periphery of a large rotating drum, providing as many piston pins and jaw devices as the number of straws being processed.

The procedure briefly described above, although assuring a high quality finished product, is considerably limited by the necessity of making the two jaws rotate, since this action involves the execution of particularly complex and delicate machinery, due to the considerable number of parts in rotation.

The invention refers to a procedure or machine corresponding to the pre-characterising portion of the independent claims. (US—A—3641884).

In the Patent US—A—3409224, a procedure for obtaining the folding section on a plastic straw is described, which is based on the use of an idle stem, with a series of circular grooves, which is previously inserted within a straw, then pressed and rolled over a rod with a series of longitudinal grooves, the profile of which matches the toothed part of the abovementioned stem.

This method of production, which presents no problems in theory, cannot be carried out in practice, in that in order to effect the folding part along the straw, the abovementioned stem must be pressed onto the grooved rod at such high pressure, that it results in an unacceptable curve or even breaking of the stem, due to deflection. On the other hand, the resistant section of the stem cannot be increased, since it must of course be lower than that of the straw, within which the stem is inserted.

In the French Patent FR—A—2073—777, a procedure for obtaining helicoidal ribs on the internal surface of pipes is described.

This procedure is based on the use of two parallel plates, side by side and moving in opposite directions, in which the pipe to be threaded is pressed, since one of the two plates is perfectly smooth, while the other has one or more oblique ribs which, following rotation of the pipe, cause the forming of a helicoidal rib on the external and internal surface of the pipe in question.

The procedure described in Patent FR—A—2 073 777, is not of course suitable for forming the folding part of a plastic straw: in fact a plastic straw would never be able to withstand the squashing pressure of the two aforementioned plates, from which it would emerge completely crushed.

The new procedure, and machine developed in consideration of the problems encountered in machinery and procedures used in the previous technique are subject matter of independent claim 1 and 2. The invention is based, inter alia, on the use of two grooved parallel bars, opposite each other and moving in opposite directions, between which the straw is pressed, after having been positioned on a suitably grooved piston pin, which in this way, will not be affected by deformation or bending stress.

Moreover, it should be said, that in the realisation of the machine able to carry out the procedure according to the invention, a construction solution was adopted, which allows several straws to be worked on at the same time, as they are inserted on a series of parallel piston pins side by side, which are all clamped at the same time, within the aforementioned pair of grooved parallel bars, opposite each other and moving in opposite directions, in alternate movements.

In fact, the straw is nested in a piston pin free to turn idle, in a part of which there are some small circular grooves parallel to each other. Just in this area the pressing action is carried out by the rectilinear alternating and opposite movement of two bars which are orthogonal to the piston pin axis, against which they press the straw, having longitudinal grooves, the profile of which matches that of the grooves of the piston pin itself. These bars, which are maintained at an ideal temperature, form the folding section of the straw which turns idle together with the piston pin. The whole process is similar to rolling which is normally used for obtaining threaded bars or screw threads.

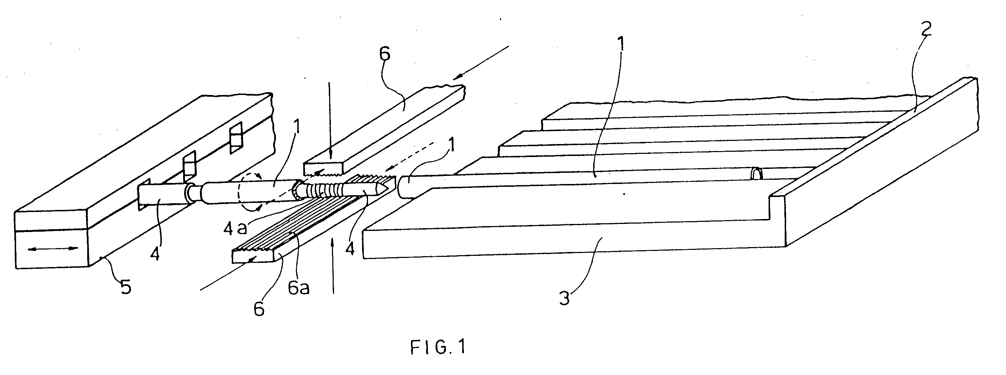

For a more detailed explanation the description of the invention continues with reference to the attached drawing which is only for illustrative and not restrictive purposes. Figure 1 is the axonometric schematic representation of the mechanism for the execution of the procedure in question.

With reference to the attached drawing, it should be noted that, according to the procedure which is the subject of the present patent application, each individual straw (1) is placed on a support groove (2), provided in a metal plate (3), which houses a section of the whole length of the straw; inside the straw (1) a piston (4) with a point for centering the straw is subsequently inserted; the piston pin is mounted on a slide (5) which has the possibility of moving forwards and backwards on the horizontal plane while keeping the piston pin (4) coaxial to the straw (1).

It should be specified as regards this last point that the piston pin (4) has the peculiarity of being able to rotate idle and that in the area near the point it has some small circular grooves parallel to each other (4a).

Corresponding to these grooves (4a) on the piston pin, and above and below it, two bars (6) are positioned on parallel planes, in diametral opposition to each other and orthogonal to the axis of the piston pin itself (4). The bars are longitudinally fluted by grooves (6a) with profiles matching those of the grooves (4a) of the piston pin (4).

These bars (6) which are kept at a suitable temperature to make the plastic of the straw (1) more malleable without however melting it, are brought closer to the straw itself (1) until they embrace it, so as to press it against the piston pin (4). Subsequently they are translated parallely by means of an alternating and opposite movement able to draw the straw (1) and the piston pin (4) in rotation together; the straw is integral with the piston pin thanks to the pressure exerted by the bars.

At this point, taking into consideration that both the straw (1) and the piston pin (4) rotate idle, it is easy to understand how the straw (1) is marked all around by the grooved profile of the bars (6) thanks to the matching grooves (4a) of the piston pin (4). On conclusion of the movement of these bars (6), a perfect folding effect on the body is obtained.

Once this action is completed the two bars (6) move away from the piston pin, which first of all moves forward sufficiently to contract folding, then withdraws to extract itself from the straw (1). This extraction is assisted by a special pneumatic blow.

Finally it should be noted that since the plate (3) is fitted with a large number of support grooves (2), with a corresponding number of piston pins (4) able to move forward together, penetrating the same number of straws (1), providing bars (6) with a suitable length, numerous finished products can be obtained simultaneously.

## Claims

1. Procedure for obtaining the folding part of a plastic drinking straw, which makes use of a piston pin (4), with a centering tip and a series of parallel circular grooves (4a), which will be inserted precisely within a straw and comprising the steps of

a) Insertion of the aforementioned piston pin (4), within the straw, where it is free to turn idle around its own axis, characterised by

b) Clamping of the piston pin (4) within two heated bars (6), parallel to each other and orthogonal to the axis of the piston pin (4), each having a series of longitudinal grooves (6a) which match the profile of the circular grooves (4a) of the piston pin (4),

c) Simultaneous movement, alternate and in opposite directions of said heated bars (6).

d) Distancing of the heated bars (6) from the piston (4) to allow the extraction of the folded straw from this same piston pin (4).

2. Machine for carrying out the working procedure described in claim 1, characterised by the fact which comprises:

— a pointed piston pin (4) which is free to turn around its own longitudinal axis with a series of circular and parallel grooves (4a) near the tip;

— a slide (5), which moves horizontally to support a series of piston pins (4) in a position parallel and coaxial to grooves (2) opposite the mobile slide (5);

characterised by

— a metallic plate (3) on the surface of which a series of parallel grooves (2) are made, each able to hold exactly one straw (1);

— two heated bars (6), horizontal, diametrically opposite each other with respect to the piston pin (4) and orthogonal to the longitudinal axis of the piston pin (4), each with a series of longitudinal grooves, having the same profile as the circular grooves (4a) of the piston pin (4).

## Patentansprüche

1. Verfahren zur Erzielung eines Falttraktes in einem Plastik-Trinkhalm durch Verwendung eines Kolbens (4) mit Spitze, die zum Einführen dient, und einer Serie von parallelen, umlaufenden Rillen (4a); dieser Kolben wird in folgenden Schritten exakt in das Innere des Trinkhalms eingeführt

a) Einführen des o.g. Kolbens (4) in das Innere des Trinkhalms, wo der besagte Kolben (4) sich um seine eigene Achse drehend leer laufen kann, gekennzeichnet durch

b) das Einschließen des Kolbens (4) zwischen zwei erwärmten Profileisen auf parallelen und in Bezug auf die Kolbenachse (4) rechtwinklig stehenden Ebenen, versehen mit Längsrillen (6a), die den Rillen (4a) des Kolbens (4) angepaßt sind;

c) die gleichzeitige, abwechselnde, entgegengesetzte Bewegung und von besagten, erwämten Profileisen (6)

d) das sich Entfernen der besagten erwärmten Profileisen (6) vom Kolben (4), um das Herausziehen des vom Kolben (4) gefalteten Trinkhalms zu ermöglichen.

2. Maschine zur Ausführung des unter Punkt 1 der Patentansprüche beschriebenen Verfahrens, bestehend aus:

— einem Kolben (4), zugespitzt und in der Lage, sich um seine eigene Längsachse zu drehen, mit einer Serie von umlaufenden, parallelen Rillen (4a) in der Nähe der Spitze;

— einem Schlitten (5), der sich auf horizontaler Ebene bewegt und eine Serie von Kolben (4) in paralleler und — bezogen auf die dem beweglichen Schlitten (5) entgegengesetzten Rillen (2)

— in koaxialer Position hält;
gekennzeichnet durch:

— eine Metallplatte (3), deren Oberfläche eine Serie von parallelen Rillen (2) aufweist, die jeweils genau einen Trinkhalm (1) aufzunehmen vermögen;

— auf horizontaler Ebene zwei erwärmte Profileisen (6), einander diametral entgegengesetzt in Bezug auf den Kolben (4) und senkrecht zur Kolbenachse, mit Längsrillen (6a) versehen, die den umlaufenden Rillen (4a) des Kolbens (4) entsprechen.

**Revendications**

1. Processus pour obtenir, dans une paille en plastique pour boissons, un segment à soufflet, en utilisant un goujon (4) muni d'une pointe qui s'encastre et d'une série de gorges circulaires parallèles (4a), ledit segment s'insérant exactement à l'intérieur de la paille, et comprenant les phases suivantes:

a) l'insertion du susdit goujon (4) à l'intérieur de la paille où ledit goujon (4) peut tourner à vide autour de son propre axe, caractérisé par

b) le positionnement du goujon (4) entre deux barres réchauffées (6) sur des plans parallèles et orthogonaux à l'axe du goujon (4), rayées longitudinalement par des gorges (6a) qui ont un profil conforme et conjugué à celui des gorges (4a) du goujon (4);

c) le mouvement simultané alterné et opposé de ledites barres réchauffées (6);

d) l'éloignement de ledites barres réchauffées (6) du goujon (4) afin de permettre l'extraction de la paille pliée par le goujon (4).

2. Machine pour le déroulement du processus décrit à la revendication 1, qui comprend:

— un goujon (4) pointu, en mesure de tourner à vide autour de son propre axe longitudinal, muni près de sa pointe d'une série de gorges circulaires parallèles (4a);

— un chariot (5) qui se meut sur le plan horizontal et que maintient une série de goujons (4) en position parallèle et coaxiale par rapport aux gorges (2) opposées au chariot movible (5); caractérisé par:

— une plaque métallique (3) dont la surface présente une série de gorges parallèles (2), chacune en mesure de positionner exactement une paille (1);

— sur le plan horizontal deux barres réchauffées (6) diamétralement opposées entre elles en relation au goujon (4) et orthogonales par rapport à ce dernier, ledites barres étant rayées longitudinalement par des gorges (6a) qui ont un profil conforme à celui des gorges circulaires (4a) du goujon (4).

FIG.1